# EUROPEAN PATENT APPLICATION

(11) **EP 4 596 493 A1**
(43) Date of publication of application: **06.08.2025**
(21) Application number: 23871422.4
(22) Date of filing: 26.07.2023
(51) Int. Cl.: C01B 21/06, B01J 27/24, B01J 35/00, B01J 37/04, B01J 37/08

(54) **METHOD FOR PRODUCING TANTALUM NITRIDE MATERIAL, AND TANTALUM NITRIDE MATERIAL**

(30) Priority: 29.09.2022 JP 2022156512
(71) Applicant: JX Advanced Metals Corporation, Tokyo 105-8417 (JP); Shinshu University, Matsumoto-shi, Nagano 390-8621 (JP)
(72) Inventor: TAKAHASHI, Makoto, Hitachi-shi, Ibaraki 317-0056 (JP); DOMEN, Kazunari, Nagano-shi, Nagano 380-8553 (JP); HISATOMI, Takashi, Nagano-shi, Nagano 380-8553 (JP)
(74) Representative: Forresters IP LLP
(86) International application number: PCT/JP2023/027418
(87) International publication number: WO 2024/070179

(57) **Abstract**

Provided is a method for producing a tantalum nitride material including a nitriding step of heating a precursor containing a lithium tantalum composite oxide in the presence of a nitrogen compound.

## Description

### TECHNICAL FIELD

The present disclosure relates to a method for producing a tantalum nitride material, and to a tantalum nitride material.

### BACKGROUND ART

Tantalum nitrides such as tantalum nitride and tantalum oxynitride can absorb light with longer wavelengths than conventional oxide photocatalysts (Non-Patent Documents 1 and 2). Therefore, tantalum nitrides are expected to be used as photocatalysts that absorb light with wavelengths in the visible light region and split water into hydrogen and oxygen.

As a method for producing tantalum nitride, for example, Patent Document 1 discloses a method in which potassium tantalate (KTaO₃), which is a composite oxide of tantalum and a metal selected from sodium, potassium and the like, is used as a precursor, and the precursor is heat-treated in an ammonia-containing gas. According to this production method, because nitriding can be completed in a relatively short heat treatment time, tantalum nitride can be produced with less thermal energy.

Meanwhile, Patent Document 2 discloses a method for producing high-purity tantalum nitride by nitriding tantalum oxide (Ta₂O₅) with an ammonia gas flow rate of 0.05 to 0.8 L/min per 1 g of tantalum oxide under temperature conditions of 800 to 950°C. Patent Document 2 also discloses that there is a tendency for the wavelength to shift to longer wavelengths as the oxygen content decreases and the purity increases.

### PRIOR ART DOCUMENTS

### PATENT DOCUMENTS

Patent Document 1: Japanese Unexamined Patent Application Publication No. 2019-037918
Patent Document 2: Japanese Unexamined Patent Application Publication No. 2017-164732

### NON-PATENT DOCUMENTS

Non-Patent Document 1: Nature Catalysis, 2018, Vol. 1, p. 756-763
Non-Patent Document 2: Angewandte Chemie International Edition, 2022, Vol. 61, Issue 17, e202116573

### SUMMARY OF INVENTION

### TECHNICAL PROBLEM

Thus, there are needs to develop a method for producing high-purity tantalum nitride.

Nevertheless, in the production method described in Patent Document 1, metals such as Na and K derived from the precursor remain in significant amounts in the produced tantalum nitride, and it is not possible to highly purify the tantalum nitride sufficiently.

An object of the present disclosure is to provide a method for producing a high-purity tantalum nitride material.

Another object of the present disclosure is to provide a high-purity tantalum nitride material.

### SOLUTION TO PROBLEM

In order to achieve the objects described above, as a result of intense study, the present inventors and others discovered that a high-purity tantalum nitride material can be obtained by using a precursor containing a lithium tantalum composite oxide as a precursor of the tantalum nitride material. In other words, the gist of the present disclosure is as described below.

[1] A method for producing a tantalum nitride material, comprising a nitriding step of heating a precursor comprising a lithium tantalum composite oxide in the presence of a nitrogen compound.
[2] The method for producing a tantalum nitride material according to [1], wherein the lithium tantalum composite oxide is an amorphous form.
[3] The method for producing a tantalum nitride material according to [2], further comprising, prior to the nitriding step:
   a firing step of firing a raw material mixture comprising a lithium compound and a tantalum compound to obtain a fired product; and
   an amorphization step of causing the fired product to come into contact with an acidic aqueous solution to obtain the lithium tantalum composite oxide.
[4] The method for producing a tantalum nitride material according to [3], wherein a molar ratio of lithium in the lithium compound relative to tantalum in the tantalum compound in the raw material mixture is 3.00 or more and 3.50 or less.
[5] The method for producing a tantalum nitride material according to any one of [1] to [4], wherein the nitriding step is performed in the presence of a zirconium compound.
[6] A tantalum nitride material comprising one or more nitrides selected from the group consisting of a tantalum nitride, a tantalum oxynitride, a composite nitride of tantalum and another metal, and a composite oxynitride of tantalum and another metal, wherein
   the nitride content is 99.5 wt% or more, and
   the lithium content is 0.1 ppm or more and 3,000 ppm or less.
[7] A tantalum nitride material comprising the tantalum nitride material according to [6] and zirconium doped therein, wherein
   the nitride material content is 99.5 wt% or more, and
   the lithium content is 0.1 ppm or more and 3,000 ppm or less.
[8] A photocatalyst comprising the tantalum nitride material according to [7] and one or more co-catalysts selected from the group consisting of ruthenium, a chromium oxide, and an iridium oxide loaded thereon.
[9] The photocatalyst according to [8], wherein the photocatalyst has water-splitting photocatalytic activity under visible light irradiation.

### ADVANTAGEOUS EFFECTS OF INVENTION

According to the present disclosure, a method for producing a high-purity tantalum nitride material can be provided.

Furthermore, a high-purity tantalum nitride material can be suitably provided.

### BRIEF DESCRIPTION OF DRAWINGS

[Fig. 1] Fig. 1 shows the powder XRD patterns of the tantalum nitride material obtained in Example 1 and the tantalum nitride material obtained in Example 2.
[Fig. 2] Fig. 2 shows the results of evaluation of the photocatalytic activity of the photocatalyst obtained in Example 7.

### DESCRIPTION OF EMBODIMENTS

Specific embodiments of the present disclosure are now described in detail. The present disclosure is not limited to each embodiment, and can be embodied by modifying the components within the scope of the gist of the disclosure. In addition, various inventions can be formed through appropriate combinations of multiple components disclosed in each embodiment. For example, some components may be deleted from all of the components described in the embodiments. Furthermore, components of different embodiments may be appropriately combined.

In addition, when multiple combinations of lower and upper limits of numerical ranges are described in this specification, it is also possible to adopt a numerical range that combines the lower limit of one numerical range with the upper limit of another numerical range.

### 1) Method for producing tantalum nitride material

The method for producing a tantalum nitride material according to the first embodiment of the present disclosure includes a nitriding step of heating a precursor containing a lithium tantalum composite oxide in the presence of a nitrogen compound. The method for producing a tantalum nitride material according to this embodiment enables the production of high-purity tantalum nitride.

In this specification, "nitride" also includes oxynitrides. Accordingly, the tantalum nitride material in this embodiment includes one or more nitrides selected from the group consisting of a tantalum nitride, a tantalum oxynitride, a composite nitride of tantalum and another metal, and a composite oxynitride of tantalum and another metal. In addition, a "high purity" tantalum nitride material means a material having a high content of the nitrides described above and a low content of impurity elements.

Furthermore, in this specification, the compound to be subject to nitriding is referred to as a "precursor."

The lithium tantalum composite oxide is a composite oxide containing at least lithium and tantalum, and may contain metal atoms other than lithium and tantalum, as well as hydrogen atoms, in the oxide composition, or may be a hydrate. The lithium tantalum composite oxide may be a crystalline or an amorphous form, but is preferably an amorphous form. By using an amorphous lithium tantalum composite oxide as a precursor, nitriding can proceed easily even at low temperatures and/or in a short time, and a tantalum nitride material can be produced efficiently with low energy. In addition, by using an amorphous lithium tantalum composite oxide as a precursor, lithium can be easily removed from the tantalum nitride material during the nitriding process, and a tantalum nitride material with higher purity can thereby be produced.

The lithium tantalum composite oxide can be prepared by performing a firing step of firing a raw material mixture containing lithium compounds such as lithium carbonate (Li₂CO₃) and lithium chloride (LiCl) and tantalum compounds such as tantalum oxide (Ta₂O₅). Here, the molar ratio of lithium in the lithium compound relative to tantalum in the tantalum compound in the raw material mixture is preferably 3.00 or more and 3.50 or less, more preferably 3.10 or more and 3.40 or less, and most preferably 3.20 or more and 3.30 or less. This is because it is presumed that by setting the molar ratio of tantalum relative to lithium in the raw material mixture within the range described above, it is possible to suppress the generation of crystalline components that are difficult to be amorphized in the amorphization step described later.

The firing conditions of the raw material mixture in the firing step are not particularly limited, and the firing temperature is usually 800°C or higher and 1,000°C or less, and the firing time is 1 hour or longer and within 20 hours. In addition, the firing of the raw material mixture can be performed in an air atmosphere.

After the firing step described above, an amorphization step of causing the fired product obtained in the firing step to come into contact with an acidic aqueous solution is preferably performed because the lithium tantalum composite oxide is amorphized and lithium-containing components such as unreacted lithium compounds are removed. Examples of the acidic aqueous solution include hydrochloric acid and sulfuric acid aqueous solutions. The methods of causing the fired product to come into contact with the acidic aqueous solution are not particularly limited, and examples thereof include a method of dispersing the fired product in water and adding the acidic aqueous solution to the resulting dispersion. The amount of the acidic aqueous solution added at this time may be an amount that causes the pH (25°C) of the dispersion liquid to be 1 or more and 4 or less, and is preferably an amount that causes the pH of the dispersion liquid to be 1 or more and 3 or less.

The fired product is treated with the acidic aqueous solution and thereafter collected by filtration. Here, collection of the acid-treated fired product by filtration and washing of the filtrate with distilled water constitute one cycle, and it is preferable to carry out this cycle multiple times, for example, two or three times. This is because the acid-treated fired product is thereby washed, the lithium-containing components are further removed, and the purity of the amorphous lithium tantalum composite oxide is additionally increased.

More specifically, lithium orthotantalate (Li₃TaO₄) can be prepared by firing lithium carbonate and tantalum oxide, and this can be used as the lithium tantalum composite oxide. Preferably, an amorphous material represented by Li₃₋ₓHₓTaO₄ (1.6<x≤2.7) can be prepared by causing the lithium orthotantalate to come into contact with an aqueous sulfuric acid solution, and this amorphous material can be used as the lithium tantalum composite oxide.

The method for preparing the lithium tantalum composite oxide has been described above, but the lithium tantalum composite oxide may be a commercially available product, or may be a commercially available product that has been made into an amorphous form.

The precursor may contain, in addition to the lithium tantalum composite oxide, an oxide of another metal; that is, an oxide of a metal other than lithium and tantalum. By nitriding the precursor containing the oxide of another metal, a tantalum nitride material containing a nitride selected from a composite nitride of tantalum and another metal and a composite oxynitride of tantalum and another metal can be produced. Among these nitrides, composite oxynitrides such as barium tantalum oxynitride (BaTaO₂N) and strontium tantalum oxynitride (SrTaO₂N) are being considered for use as photocatalysts. Accordingly, the oxide of the other metal is preferably selected from barium oxide, strontium oxide and the like so that a tantalum nitride material containing the composite oxynitride can be obtained.

The nitrogen compound used in the nitriding step is a nitrogen source that supplies the precursor with nitrogen required for nitriding. Examples of the nitrogen compound include ammonia, zinc nitride, and carbon nitride, and ammonia is preferably used. When ammonia is used as the nitrogen compound, the nitriding step is preferably performed under the flow of an ammonia-containing gas. The ammonia-containing gas may be ammonia gas or a mixed gas of ammonia gas and nitrogen gas. The flow rate of the ammonia-containing gas is 100 mL/min or more and 300 mL/min or less. By setting the flow rate of the ammonia-containing gas to 100 mL/min or more, a sufficient amount of nitrogen can be supplied to the precursor, and the nitriding time can be shortened. In addition, by setting the flow rate of the ammonia-containing gas to 300 mL/min or less, the amount of ammonia gas not consumed in nitriding can be reduced, and the manufacturing cost can be suppressed.

The heating temperature in the nitriding step is preferably 800°C or higher and 950°C or less, and more preferably 850°C or higher and 920°C or less. By setting the heating temperature at 800°C or higher, nitriding can be sufficiently advanced. Also, by setting the heating temperature at 950°C or lower, it is possible to suppress the release of nitrogen from the generated tantalum nitride (Ta₃N₅) and the conversion to nitrogen-deficient subnitride (Ta₃Nₓ,0≤x<5).

The heating time of the precursor in the nitriding step is determined according to the heating temperature and the composition of the desired tantalum nitride material. The heating time at the heating temperature described above is usually 0.5 hours or longer and within 30 hours. If it is desirable to increase the ratio of various nitrides other than oxynitrides in the tantalum nitride material, the heating time should be extended within the range described above, and if it is desirable to increase the ratio of oxynitrides, the heating time should be shortened within the range described above.

The reaction apparatus used in the nitriding step may be any apparatus capable of withstanding the heating temperature described above, and examples of the apparatus that can be used include a tubular furnace, an electric furnace, a batch kiln, and a rotary kiln.

In the nitriding step, it is more preferable that the nitriding of the precursor is performed in the presence of a zirconium compound such as zirconium oxychloride (ZrOCl₂), which allows zirconium to be doped into various nitrides, thereby improving the photocatalytic activity of the tantalum nitride material when used as a photocatalyst.

The amount of the zirconium compound charged in the nitriding step is not particularly limited, and is preferably an amount such that the molar ratio of the total amount of tantalum in the various nitrides relative to zirconium is 5 or more and 25 or less, more preferably an amount such that the molar ratio is 10 or more and 20 or less, and most preferably an amount such that the molar ratio is 15 or more and 20 or less.

In the production method according to this embodiment, it is preferable to include, after the nitriding step in the presence of a zirconium compound, a reaction step of causing the nitride obtained in the nitriding step to react with one or more types of compounds selected from the group consisting of a ruthenium compound, a chromium compound, and an iridium compound. In other words, the reaction step is a loading step of causing one or more types of components selected from the group consisting of ruthenium, a chromium oxide, and an iridium oxide to be loaded on the nitride obtained in the nitriding step. These components act as a co-catalyst when the tantalum nitride material is used as a photocatalyst, and can improve the photocatalytic activity of the tantalum nitride material. In addition, an example of the chromium oxide is chromium oxide (Cr₂O₃), and an example of the iridium oxide is iridium oxide (IrO₂).

The reaction step may also be a step of causing one or more compounds selected from the group consisting of a ruthenium compound, a chromium compound, and an iridium compound to react with the nitride one by one. That is, for example, the reaction step may also be a step of first causing a ruthenium compound to react with the nitride obtained in the nitriding step to load ruthenium, then causing a chromium compound to react with the nitride to load chromium oxide, and finally causing an iridium compound to react with the nitride to load iridium oxide.

The ruthenium compound used in the reaction step may be ruthenium chloride (RuCl₃). The chromium compound used in the reaction step may be potassium chromate (K₂CrO₄). The iridium compound used in the reaction step may be sodium hexachloroiridate (IV) hexahydrate (Na₂IrCl₆•6H₂O).

As the reaction conditions between these compounds and the nitrides obtained in the nitriding step, known reaction conditions used when loading ruthenium, chromium oxide, or iridium oxide on a photocatalyst may be suitably adopted.

### 2) Tantalum nitride material

A tantalum nitride material according to a second embodiment of the present disclosure is a tantalum nitride material obtained by the production method according to the first embodiment described above, and includes one or more nitrides selected from the group consisting of a tantalum nitride, a tantalum oxynitride, a composite nitride of tantalum and another metal, and a composite oxynitride of tantalum and another metal. Moreover, a tantalum nitride material according to a third embodiment of the present disclosure includes a nitride material in which zirconium is doped into the tantalum nitride material according to the second embodiment described above.

With the method of nitriding a composite oxide of a metal containing tantalum and sodium and the like as described in Japanese Unexamined Patent Application Publication No. 2019-037918, a relatively large amount of metal elements, such as sodium, derived from the precursor will remain in the produced nitride, making it impossible to obtain a high-purity tantalum nitride material.

Meanwhile, the tantalum nitride materials according to the second and third embodiments of the present disclosure are produced by the production method according to the first embodiment described above, and therefore have a low amount of residual lithium derived from the precursor and are of high purity.

The nitride content in the tantalum nitride material according to the second embodiment of the present disclosure is 99.5 wt% or more, preferably 99.8 wt% or more, more preferably 99.9 wt% or more, and typically less than 100 wt%.

The nitride material content in the tantalum nitride material according to the third embodiment of the present disclosure is 99.5 wt% or more, preferably 99.8 wt% or more, more preferably 99.9 wt% or more, and typically less than 100 wt%.

The lithium contained in the tantalum nitride material according to the second and third embodiments of the present disclosure is an impurity element derived from the precursor lithium tantalum composite oxide. The lithium content in these tantalum nitride materials is 0.1 ppm or more and 3,000 ppm or less, preferably 1 ppm or more and 3,000 ppm or less, more preferably 3 ppm or more and 2,500 ppm or less, even more preferably 5 ppm or more and 2,000 ppm or less, and most preferably 8 ppm or more and 1,000 ppm or less.

With the conventional production methods that do not use precursors containing lithium tantalum composite oxides, the tantalum nitride material may contain lithium derived from the lithium impurities in the raw materials and lithium that is inevitably mixed in during other production steps. Nevertheless, as shown in the Examples described later, the tantalum nitride material obtained by such conventional production methods does not contain lithium in an amount of 0.1 ppm or more, and even if it does contain lithium, the content is so small that it cannot be detected by ordinary analytical methods such as GD-MS analysis.

Meanwhile, with the conventional production method using a composite oxide of tantalum and a metal selected from sodium and the like as a precursor instead of a lithium tantalum composite oxide, a large amount of the metal will remain in the obtained tantalum nitride material. For example, as shown in the Examples described later, a tantalum nitride material obtained by using Na_{8-y}H_{y}Ta₆O₁₉•H₂O as a precursor contains a large amount of sodium; specifically, 7,300 ppm of sodium. Meanwhile, the tantalum nitride materials according to the second and third embodiments of the present disclosure have a lithium content equal to or less than the lower limit described above, despite using a lithium tantalum composite oxide as a precursor.

Accordingly, the inclusion of lithium in the range described above is unique to the tantalum nitride materials according to the second and third embodiments of the present disclosure.

The impurity elements other than lithium contained in the tantalum nitride materials according to the second and third embodiments of the present disclosure are elements other than tantalum, the other metals mentioned above, oxygen, nitrogen, and zirconium, and examples thereof include metal elements such as sodium, aluminum, silicon, potassium, calcium, chromium, iridium, and iron; non-metal elements such as chlorine and phosphorus; and the like.

### 3) Method for measuring purity of tantalum nitride material

The purity of the tantalum nitride material according to the second embodiment of the present disclosure; that is, the content of nitride in the tantalum nitride material, is determined by measuring the content of impurity elements contained in the tantalum nitride material by glow discharge mass spectrometry (GD-MS) and subtracting the total content of each impurity element from 100 wt%. The purity of the tantalum nitride material according to the third embodiment of the present disclosure; that is, the content of the nitride material in the tantalum nitride material, is also determined by the same method as the purity of the tantalum nitride material according to the second embodiment of the present disclosure. Nevertheless, the purity is calculated by assuming that impurity elements with a content below the measurement limit of GD-MS are not substantially contained. The measurement conditions of GD-MS can be those used in the Examples described below.

### 4) Photocatalyst

The fourth embodiment of the present disclosure is a photocatalyst in which one or more co-catalysts selected from the group consisting of ruthenium, a chromium oxide, and an iridium oxide are loaded on the tantalum nitride material according to the third embodiment. The photocatalyst according to this embodiment is produced by the production method according to the first embodiment, which includes the reaction step.

An example of chromium oxide as the co-catalyst is chromium oxide (Cr₂O₃). An example of iridium oxide as another co-catalyst is iridium oxide (IrO₂).

The amount of the co-catalyst loaded on the tantalum nitride material is usually 0.1 parts by weight or more and 8.0 parts by weight or less, and preferably 0.5 parts by weight or more and 4.0 parts by weight or less, relative to 100 parts by weight of the nitride material in the tantalum nitride material.

The photocatalyst according to this embodiment preferably has water-splitting photocatalytic activity under visible light irradiation; that is, it preferably has photocatalytic activity (water-splitting activity) of absorbing light in the visible light region and splitting water into hydrogen and oxygen.

### EXAMPLES

The embodiments of the present disclosure are now described more specifically with reference to the Examples, but the present disclosure is not limited to these Examples in any way.

### [Glow discharge mass spectrometry (GD-MS) measurement conditions]

- Device: Astrum (manufactured by Nu Instruments)
- Discharge current: 2.0 mA
- Discharge voltage: 1.0 V
- Discharge time: Approximately 60 min
- Discharge gas: Ar
- Discharge gas flow rate: 300 sccrm

### [Powder X-ray diffraction (XRD) measurement conditions]

- Device: MiniFlex300 (manufactured by Rigaku)
- X-ray source: Cu (Kα) ray (wavelength 1.541867 Å)
- Tube voltage: 30 kV
- Tube current: 10 mA
- Measurement range: 2θ = 10° to 80°
- Scan speed: 10°/min
- Scan step width: 0.01°
- Divergence slit: 1.25°
- Scattering slit: 1.25°
- Receiving slit: 13 mm

### [Example 1]

### (Preparation of precursor)

4.42g of Ta₂O₅ (manufactured by Rare Metallic Co., Ltd.; purity of 99.99%) and 2.22 g of Li₂CO₃ (manufactured by Kanto Chemical Co., Inc.) were placed in an agate mortar and crushed with a pestle to obtain a raw material mixture. The raw material mixture was placed in an alumina crucible and fired at 850°C for 6 hours in an air atmosphere using a muffle electric furnace to obtain a fired product containing Li₃TaO₄. This fired product was dispersed in 500 mL of ultrapure water to obtain a Li₃TaO₄ dispersion liquid with a pH (25°C) of about 12. A 10% aqueous sulfuric acid solution was added little by little to the obtained Li₂CO₃ dispersion liquid. At the time that the pH (25°C) of the dispersion liquid became 3, the addition of the 10% aqueous sulfuric acid solution was stopped, and the dispersion liquid was filtered using a membrane filter with a pore size of 1 µm to collect the solid matter. The solid matter was vacuum dried at 40°C for 12 hours or longer and then crushed to obtain amorphous Li₃₋ₓHₓTaO₄ (1.6<x≤2.7). This Li₃₋ₓHₓTaO₄ contained a small amount of crystalline lithium tantalate (LiTaO₃). The main manufacturing conditions of the precursor and the components contained in the precursor are shown in Table 1.

### (Nitriding)

169 µL of 2 mol/L ZrOCl₂ aqueous solution and 6 mL of ethanol were placed and mixed in an agate mortar. 1.2 g of Li₃₋ₓHₓTaO₄ was weighed and mixed with the obtained solution so that the molar ratio of Ta to Zr in the raw material mixture is 15, and the mixture was further mixed for 1 minute while being ultrasonically dispersed using an ultrasonic disperser. The obtained mixture was heated at 150°C while being vigorously stirred, and completely dried to obtain the raw material mixture.

The raw material mixture was transferred to an alumina combustion boat. The combustion boat containing the raw material mixture was placed in an alumina tube, and the alumina tube was placed in a vacuum furnace body opening/closing-type electric tubular furnace. The atmosphere in the alumina tube was replaced with nitrogen gas, and then the nitrogen gas in the alumina tube was replaced with ammonia gas. Next, the raw material mixture was heated at 900°C for 1 hour while circulating ammonia gas in the alumina tube at a flow rate of 200 mL/min, and then naturally cooled. The obtained powder was washed with water and filtered using a membrane filter with a pore size of 1 µm to collect the solid matter. The solid matter was vacuum dried at 40°C for 2 hours or longer and then crushed to obtain a tantalum nitride material.

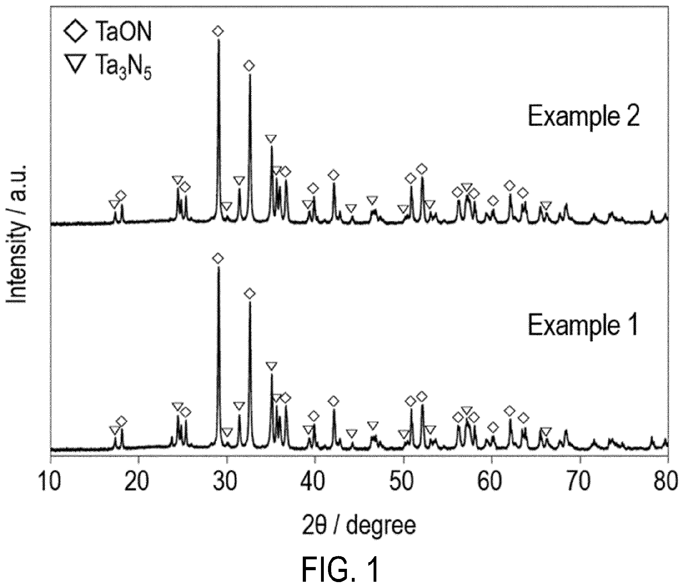

The obtained tantalum nitride material was subjected to powder XRD measurement. As a result, it was found that the tantalum nitride material was a mixture of Zr-doped Ta₃N₅ and Zr-doped TaON (hereinafter sometimes referred to as "Ta₃N₅/TaON:Zr"). The XRD pattern of the tantalum nitride material is shown in Fig. 1.

In addition, the impurity element contents and purity of the tantalum nitride material were measured by GD-MS analysis, and the results are shown in Table 2.

### [Example 2]

### (Preparation of precursor)

In the preparation of the raw material mixture, amorphous Li₃₋ₓHₓTaO₄ was obtained in the same manner as in Example 1, except that the amount of Li₂CO₃ used was 2.4 g. This Li₃₋ₓHₓTaO₄ did not contain crystalline LiTaO₃. The main manufacturing conditions of the precursor and the components contained in the precursor are shown in Table 1.

### (Nitriding)

A tantalum nitride material was obtained in the same manner as in Example 1, except that the obtained Li₃₋ₓHₓTaO₄ was used as the precursor.

The obtained tantalum nitride material was subjected to powder XRD measurement. As a result, it was found that the tantalum nitride material was Ta₃N₅/TaON:Zr. The XRD pattern of the tantalum nitride material is shown in Fig. 1.

In addition, the impurity element contents and purity of the tantalum nitride material were measured by GD-MS analysis, and the results are shown in Table 2.

### [Example 3]

### (Preparation of precursor)

Amorphous Li₃₋ₓHₓTaO₄ was obtained in the same manner as in Example 2, except that 10% sulfuric acid aqueous solution was added to the Li₂CO₃ dispersion liquid until the pH (25°C) of the dispersion liquid became 1. This Li₃₋ₓHₓTaO₄ did not contain crystalline LiTaO₃. The main manufacturing conditions of the precursor and the components contained in the precursor are shown in Table 1.

### (Nitriding)

A tantalum nitride material was obtained in the same manner as in Example 1, except that the obtained L Li₃₋ₓHₓTaO₄ was used as the precursor.

The obtained tantalum nitride material was subjected to powder XRD measurement. As a result, it was found that the tantalum nitride material was Ta₃N₅/TaON:Zr.

In addition, the impurity element contents and purity of the tantalum nitride material were measured by GD-MS analysis, and the results are shown in Table 2.

### [Example 4]

### (Preparation of precursor)

Amorphous Li₃₋ₓHₓTaO₄ was obtained in the same manner as in Example 3, except that 10% sulfuric acid solution was added to the Li₂CO₃ dispersion liquid until the pH (25°C) of the dispersion became 1, and then the cycle of collecting the solid matter by filtration and washing the filtrate with 500 mL of distilled water was repeated three times to obtain washed solid matter. This Li₃₋ₓHₓTaO₄ did not contain crystalline LiTaO₃. The main manufacturing conditions of the precursor and the components contained in the precursor are shown in Table 1.

### (Nitriding)

A tantalum nitride material was obtained in the same manner as in Example 1, except that the obtained Li₃₋ₓHₓTaO₄ was used as the precursor.

The obtained tantalum nitride material was subjected to powder XRD measurement. As a result, it was found that the tantalum nitride material was Ta₃N₅/TaON:Zr.
In addition, the impurity element contents and purity of the tantalum nitride material were measured by GD-MS analysis, and the results are shown in Table 2.

### [Comparative Example 1]

### (Preparation of precursor)

4.4 g of Ta₂O₅ (manufactured by Rare Metallic Co., Ltd.; purity of 99.99%) and 4.42 g of NaOH (FUJIFILM Wako Pure Chemical Corporation) were placed in an agate mortar and crushed with a pestle to obtain a raw material mixture. The raw material mixture was placed in an alumina crucible and fired at 350°C for 12 hours in an air atmosphere using a muffle electric furnace to obtain a fired product containing Na₃TaO₄ and NaOH. This fired product was dispersed in 500 mL of ultrapure water to obtain a Na₃TaO₄ aqueous solution with a pH (25°C) of 13. A 10% aqueous sulfuric acid solution was added little by little to the obtained Na₃TaO₄ aqueous solution, and when the pH (25°C) of the solution became 5, a white precipitate was precipitated. After decantation was performed five times, the precipitate was filtered using a membrane filter with a pore size of 1 µm to collect the solid matter. The solid matter was vacuum dried at 40°C for 12 hours or longer and then crushed to obtain Na_{8-y}H_{y}Ta₆O₁₉•H₂O (7.0<y≤7.5).

### (Nitriding)

172.6 of 2 mol/L ZrOCl₂ aqueous solution and 6 mL of ethanol were placed and mixed in an agate mortar. 1.2 g of Na_{8-y}H_{y}Ta₆O₁₉•H₂O was weighed and mixed with the obtained solution so that the molar ratio of Ta to Zr in the raw material mixture is 15, and the mixture was further mixed for 1 minute while being ultrasonically dispersed using an ultrasonic disperser. The obtained mixture was heated at 150°C while being vigorously stirred, and completely dried to obtain the raw material mixture.

The raw material mixture was transferred to an alumina combustion boat. The combustion boat containing the raw material mixture was placed in an alumina tube, and the alumina tube was placed in a vacuum furnace body opening/closing-type electric tubular furnace. The atmosphere in the alumina tube was replaced with nitrogen gas, and then the nitrogen gas in the alumina tube was replaced with ammonia gas. Next, the raw material mixture was heated at 900°C for 3 hours while circulating ammonia gas in the alumina tube at a flow rate of 200 mL/min, and then naturally cooled. The obtained powder was washed with water and filtered using a membrane filter with a pore size of 1 µm to collect the solid matter. The solid matter was vacuum dried at 40°C for 2 hours or longer and then crushed to obtain a tantalum nitride material.

The obtained tantalum nitride material was subjected to powder XRD measurement. As a result, it was found that the tantalum nitride material was Ta₃N₅/TaON:Zr.

In addition, the impurity element contents and purity of the tantalum nitride material were measured by GD-MS analysis, and the results are shown in Table 2.

### [Table 1]

**Table 1**

| | manufacturing conditions of the precursor | | | precursor | crystalline component in precursor |
|---|---|---|---|---|---|
| | Ta₂O₅:Li₂CO₃ (molar ratio) | pH of the dispersion after adding H₂SO₄ aq. solution | water washing after adding H₂SO₄ aq. solution | | |
| Example 1 | 1.00: 3.00 | 3 | not performed | Ta₃N₅/TaON:Zr | exist |
| Example 2 | 1.00 : 3.24 | 3 | not performed | | not exist |
| Example 3 | 1.00 : 3.24 | 1 | not performed | | not exist |
| Example 4 | 1.00 : 3.24 | 1 | performed | | not exist |

### [Table 2]

**Table 2**

| | content of major impurity element | | | | | | | | | purity^{*1} (wt.%) |
|---|---|---|---|---|---|---|---|---|---|---|
| | Li (ppm) | Na (ppm) | Al (ppm) | Si (ppm) | K (ppm) | Ca (ppm) | Cr (ppm) | Fe (ppm) | Hf^{*2} (ppm) | |
| Example 1 | 950 | 11 | 5.0 | 35 | 60 | 14 | 0.35 | 1.3 | 310 | 99.85 |
| Example 2 | 940 | 24 | 4.5 | 35 | 3.8 | 19 | 0.33 | 1.3 | 460 | 99.85 |
| Example 3 | 820 | 38 | 27 | 170 | 1.6 | 48 | 0.77 | 17 | 420 | 99.84 |
| Example 4 | 8.6 | 13 | 12 | 210 | 0.1 | 15 | 0.54 | 2.3 | 320 | 99.92 |
| Comparative Example 1 | <0.1 | 7,300 | 67 | 87 | 200 | 33 | 0.39 | 4.4 | 410 | 99.18 |

| | | | | | | | | | | |
|---|---|---|---|---|---|---|---|---|---|---|
| *1: "purity"refer to total proportion of Zr-doped Ta₃N₅ and Zr-doped TaON in the tantalum nitride material. *2: "Hf" is a metal element derived from Hf unavoidably contained in ZrOCl₂ | | | | | | | | | | |

Based on Table 1, in the production of the precursor, it is considered that, because the molar ratio of lithium in Li₂CO₃ relative to tantalum in Ta₂O₅ increases from 3.00, crystalline LiTaO₃ is not produced, and only amorphous Li₃₋ₓHₓTaO₄ tends to be produced.

Based on Table 2, it can be seen that when a precursor containing lithium is used (Examples 1 to 4), metal elements derived from the precursor are less likely to remain in the tantalum nitride material, and a tantalum nitride material with higher purity tends to be obtained, compared to when a precursor containing sodium is used (Comparative Example 1). One of the reasons for this is thought to be that lithium is more easily volatilized in the nitriding step than sodium, and is less likely to remain in the tantalum nitride material.

### [Example 5]

RuCl₃ aqueous solution was prepared by mixing RuCl₃•3H₂O (manufactured by Kanto Chemical Co., Inc.) with 2 mL of distilled water. 165 mg of Ta₃N₅/TaON:Zr obtained in Example 1, 683 µL of RuCl₃ aqueous solution, and 1.317 mL of distilled water were placed in an evaporating dish, and Ta₃N₅/TaON:Zr was thoroughly dispersed to obtain a mixture. The obtained mixture was heated while being vigorously stirred and then completely dried to obtain a raw material mixture.

The raw material mixture was transferred to an alumina combustion boat. The combustion boat containing the raw material mixture was placed in an alumina tube, and the alumina tube was placed in a vacuum furnace body opening/closing-type electric tubular furnace, and the atmosphere in the alumina tube was replaced with nitrogen gas. Subsequently, the raw material mixture was reduced by being heated at 250°C for 1 hour under a nitrogen/hydrogen mixed gas flow (N2:H2 = 200 mL/min:20 mL/min), and then naturally cooled to obtain Ta₃N₅/TaON:Zr with 4 wt% of Ru loaded.

### [Example 6]

K₂CrO₄ aqueous solution was prepared by mixing 2.5 g of K₂CrO₄ (FUJIFILM Wako Pure Chemical Corporation) with 50 mL of distilled water. 130 mL of distilled water, 20 mL of methanol, and 493 µL of K₂CrO₄ aqueous solution were mixed in a Pyrex (registered trademark) reactor, and the Ru-loaded Ta₃N₅/TaON:Zr obtained in Example 5 was dispersed in the resulting mixture to obtain a reaction solution.

The reactor was placed in a closed gas circulation reaction test device (manufactured by Makuhari Rikagaku Garasu Inc.), and the inside of the reactor and the inside of the device were sufficiently evacuated. Subsequently, the reaction solution was irradiated with light for 2 hours using a Xe lamp (λ ≥ 420 nm) equipped with a cold mirror (CM1) and a cutoff filter (L42), to load 4 wt% of Cr₂O₃ on the Ru-loaded Ta₃N₅/TaON:Zr. The obtained crude product was thoroughly washed and filtered using a membrane filter with a pore size of 1 µm to collect the solid matter. The solid matter was vacuum dried at 40°C for 30 minutes or longer to obtain Ta₃N₅/TaON:Zr loaded with Ru and Cr₂O₃.

### [Example 7]

0.0162 g of Na₂IrCl₆•6H₂O (manufactured by Kanto Chemical Co., Inc.) and 100 mL of distilled water were mixed, and 1 mol/L of NaOH aqueous solution was added to the resulting mixed liquid to prepare a solution with a pH (25°C) of 5. This solution was stirred while being heated in an 80°C water bath for 30 minutes, cooled in ice water for 10 minutes, and then 0.1 mol/L of HNO3 aqueous solution was added until the pH (25°C) became 9. The resulting solution was stirred while being heated again in an 80°C water bath for 30 minutes, and then cooled in ice water for 10 minutes to obtain an IrO₂ colloidal solution.

Ta₃N₅/TaON:Zr loaded with Ru and Cr₂O₃ obtained in Example 6 was dispersed in 400 mL of distilled water to obtain a dispersion liquid. 15 mL of IrO₂ colloidal solution was dropped into this dispersion liquid at 60 mL/h using a cylinder pump, and the mixture was stirred for 20 minutes to load 0.6 wt% of IrO₂ on Ta₃N₅/TaON:Zr loaded with Ru and Cr₂O₃. The obtained crude product was thoroughly washed and filtered using a membrane filter with a pore size of 1 µm to collect the solid matter. The solid matter was vacuum dried at 40°C for 30 minutes or longer to obtain Ta₃N₅/TaON:Zr loaded with Ru, Cr₂O₃, and IrO₂ (referred to as the "photocatalyst obtained in Example 7").

### [Evaluation of photocatalytic activity]

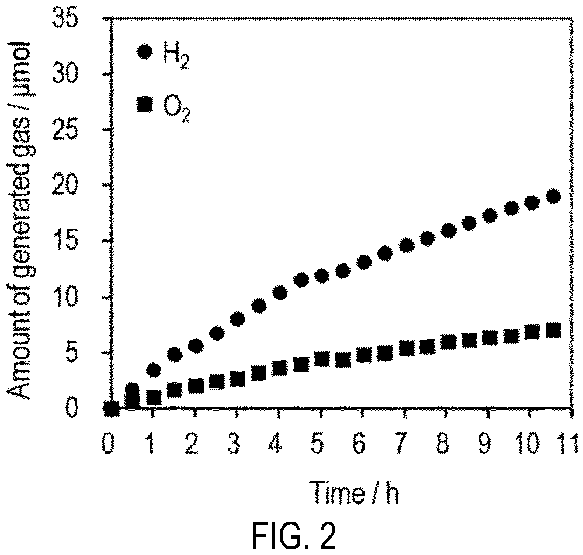

150 mL of distilled water and 36 µL of 0.1 mol/L NaOH (manufactured by Kanto Chemical Co., Inc.) were placed and mixed in a reactor, and 150 mg of the photocatalyst obtained in Example 7 was dispersed in the resulting mixed liquid to prepare a reaction solution. The reactor was placed in a closed gas circulation reaction test device, and after the inside of the reactor and the inside of the device were sufficiently evacuated, 5 kPa of Ar was introduced into the device. Subsequently, water splitting was performed by irradiating the reaction solution with light using a Xe lamp (λ ≥ 420 nm) equipped with a cold mirror (CM1) and a cutoff filter (L42). The photocatalytic activity was evaluated by analyzing the generated gas over time using a gas chromatograph connected to the closed gas circulation reaction test device. The evaluation results are shown in Fig. 2.

Based on Fig. 2, it was confirmed that the photocatalyst obtained in Example 7 exhibited photocatalytic activity of splitting water into hydrogen and oxygen under visible light irradiation.

### INDUSTRIAL APPLICABILITY

As described in the present disclosure, the tantalum nitride material produced by the method including the step of nitriding a precursor containing a lithium tantalum composite oxide has a small amount of residual impurity elements derived from the precursor and is highly pure. Moreover, the tantalum nitride material has a photocatalytic activity of splitting water into hydrogen and oxygen under visible light irradiation. Accordingly, based on its high purity, the tantalum nitride material is expected to be used as a photocatalyst that absorbs light in the visible light region, which has a large number of photons in sunlight, particularly light around 600 nm, to split water.

## Claims

1. A method for producing a tantalum nitride material, comprising a nitriding step of heating a precursor comprising a lithium tantalum composite oxide in the presence of a nitrogen compound.

2. The method for producing a tantalum nitride material according to claim 1, wherein the lithium tantalum composite oxide is an amorphous form.

3. The method for producing a tantalum nitride material according to claim 2, further comprising, prior to the nitriding step:
a firing step of firing a raw material mixture comprising a lithium compound and a tantalum compound to obtain a fired product; and
an amorphization step of causing the fired product to come into contact with an acidic aqueous solution to obtain the lithium tantalum composite oxide.

4. The method for producing a tantalum nitride material according to claim 3, wherein a molar ratio of lithium in the lithium compound relative to tantalum in the tantalum compound in the raw material mixture is 3.00 or more and 3.50 or less.

5. The method for producing a tantalum nitride material according to any one of claims 1 to 4, wherein the nitriding step is performed in the presence of a zirconium compound.

6. A tantalum nitride material comprising one or more nitrides selected from the group consisting of a tantalum nitride, a tantalum oxynitride, a composite nitride of tantalum and another metal, and a composite oxynitride of tantalum and another metal, wherein
the nitride content is 99.5 wt% or more, and
the lithium content is 0.1 ppm or more and 3,000 ppm or less.

7. A tantalum nitride material comprising the tantalum nitride material according to claim 6 and zirconium doped therein, wherein
the nitride material content is 99.5 wt% or more, and
the lithium content is 0.1 ppm or more and 3,000 ppm or less.

8. A photocatalyst comprising the tantalum nitride material according to claim 7 and one or more co-catalysts selected from the group consisting of ruthenium, a chromium oxide, and an iridium oxide loaded thereon.

9. The photocatalyst according to claim 8, wherein the photocatalyst has water-splitting photocatalytic activity under visible light irradiation.
